# EUROPEAN PATENT APPLICATION

(11) **EP 1 078 686 A2**
(43) Date of publication of application: **28.02.2001**
(21) Application number: 00118302.9
(22) Date of filing: 23.08.2000
(51) Int. Cl.: B01J 20/18, C01B 21/04, B01D 53/04

(54) **Novel adsorbents for preferential nitrogen adsorption from other gases**

(30) Priority: 25.08.1999 US 382600
(71) Applicant: PRAXAIR TECHNOLOGY, INC., Danbury, CT 06810-5113 (US)
(72) Inventor: Guliants, Vadim, Cincinnati, OH 45230 (US)
(74) Representative: Schwan, Ivo, Dipl.-Ing. (FH)

(57) **Abstract**

Novel BOG, CAN, EUO, FER, MAS, MEL, MFI, MFS, MTT, MTW, NES, STI, TON, VET framework adsorbents and mixtures thereof containing about 0% to 100% lithium monovalent cations, about 0% to 100% divalent cations and about 0% to about 100% trivalent cations for preferential adsorption of nitrogen from gas mixtures, especially in a pressure swing adsorption process.

## Description

### Field of the Invention

This invention relates to novel microporous adsorbents such as zeolites and silica aluminophosphates, their preparation, and their use in preferentially separating nitrogen gas from gas mixtures containing nitrogen and other gases. More particularly, this invention relates to novel adsorbents for preferentially separating nitrogen from other gases having essentially only monovalent, divalent and trivalent cations, and mixtures thereof as the ion-exchangeable cations. In particular, this invention relates to novel adsorbents for preferentially separating nitrogen from other gases in which the adsorbents are lithium cation-containing adsorbents having lithium as the exchangeable cation or lithium with mono and/or divalent and/or trivalent cations. The novel adsorbents have improved thermal stability, especially hydrothermal stability, and improved nitrogen selectively resulting in high nitrogen separation efficiency.

### Background of the Invention

When desiring to separate nitrogen from other gases, such as oxygen, argon and the like, on a large industrial scale, fractional distillation is most commonly employed. However, this fractional distillation process is quite capital intensive and is being increasingly displaced by new separation methods, most notably by adsorption processes for relatively smaller scale industrial applications. For example, pressure swing adsorption (PSA), has been employed as an alternative to fractional distillation gas separation process. Because of their high adsorption capacity and generally high selectivity, zeolites have generally been employed as the preferred adsorbents in these adsorbent processes.

These desirable adsorption and selectivity properties are due, at least in part, to the microporous nature of the zeolite structures, in which a large number of pores of a consistent size extend throughout the lattice framework of the zeolite and bare cations occupy well-defined and consistent positions in the pores.

For example, US Patent 2,882,243 to Milton describes the use of zeolite A having a silica/alumina ratio of 1.85±0.5 and containing hydrogen, ammonium, alkali metal, alkaline earth metal or transition metal cations as an adsorbent for separating nitrogen and oxygen.

US Patent 3,140,933 to McKee describes the use of X zeolites which have been ion-exchanged with alkali metal or alkaline earth metals as adsorbents for separating nitrogen and oxygen. Since the ion-exchange was not exhaustive and the X zeolites were synthesized using sodium as the templating agent, the partially ion-exchanged materials used were in fact mixed sodium/alkali metal or alkaline earth metal zeolites. According to US Patent 3,140,933, nitrogen adsorption improves when some of the sodium cations are replaced with lithium cations and according to US Patent 4,859,217, A highly lithium exchanged form of zeolite X improves nitrogen separation from gas streams with less polar substances such as hydrogen, argon and methane.

However, lithium-exchanged adsorbents have very high affinity for water, which when adsorbed, significantly lowers the adsorption capacity of the zeolite. Unfortunately, lithium-exchanged zeolites have poor hydrothermal stability and cannot be readily dehydrated on a commercial scale without undergoing a significant amount of cation hydrolysis leading to a loss of zeolite content and an inferior air separation adsorbent.

US Patent 4,925,460 discloses a process for separating a gas mixture comprising components with different heats of adsorption, such as nitrogen from air, employing lithium-exchanged chabazite having a Si/Al ratio from about 2.1 to 2.8 and at least 65% of the exchangeable cation capacity in the Li form.

US Patent 5,562,756 discloses a crystalline EMT structure with a Si/Al ratio less than 2.0 and a lithium cation exchange of at least 80%, the remaining cation being selected from the group consisting of calcium, magnesium, zinc, nickel, manganese, sodium, potassium and mixtures thereof, preferably including an intergrowth with a crystalline FAU structure, where an EMT structure content is between 5 and 100%, for selectively adsorptively separating nitrogen from oxygen.

Unfortunately, water molecules have high affinity for adsorption on zeolites. Therefore, in order to achieve optimiun adsorption performance it is necessary to dehydrate the zeolite at high temperatures, since adsorbed water even in small amounts significantly diminishes adsorption capacity of the zeolite. Specifically, zeolites lithium A and X displaying good nitrogen capacity and nitrogen/oxygen selectivity may be suitable as oxygen PSA adsorbents. Their use in oxygen PSA separations is described and claimed in US Patent 5,413,625. These zeolites have sufficient thermal stability to permit their dehydration, provided the dehydration temperature is careful controlled. However, under industrial conditions it is often difficult and expensive to maintain precise control over dehydration of large quantities of the zeolite. It is therefore desirable to use an adsorbent which affords the required degree of dehydration at a temperature sufficiently below the temperature of the crystal structure collapse.

US Patent 5,616,170 and European patent application EP 0 758561 Al disclose chabazite, offretite, erionite, levyne, mordenite, gmelinite, zeolite A, zeolite T, EMC-2, ZSM-3, ZSM-18, ZK-5, zeolite L, and beta whose exchangeable cations are composed, on an equivalents tons basis, of 95 to 50% lithium cations, 4 to 50% of one or more trivalent ions of aluminum, cerium, lanthanum, and mixed lanthanides and 0 to 15% of other cations as preferentially adsorbing nitrogen from gas mixtures.

However, a need still exists for adsorbents having improved nitrogen selectivity, hydrothermal stability, having less affinity for water and that can be prepared at a lower cost of manufacture. The adsorbents of this invention provide one or more of these desired characteristics.

### Brief Summary of the Invention

Novel adsorbents are provided by this invention which are usable in separation of nitrogen from gas mixtures and are characterized by one or more of the following characteristics, namely improved nitrogen selectivity, hydrothermal stability, lowered affinity for water and a lowered cost of production. These novel adsorbents are especially useful in separating nitrogen from gas mixtures by PSA and/or TSA processes. The novel adsorbents of this invention are BOG, CAN, EUO, FER, MAZ, MEL, MFI, MFS, MTT, MTW, NES, STI, TON, VET frameworks and mixtures thereof wherein said adsorbents have as exchangeable cations, on an equivalents basis, from about 0% to about 100% monovalent cations, from about 0% to about 100% divalent cations and from about 0% to about 100% trivalent cations (for a total of 100% on an equivalents basis). Generally, the lithium cation-containing adsorbents will have from about 0% to about 100% lithium, from about 0% to about 100% divalent cations, from about 0% to about 100% other monovalent cations and from about 0% to about 100%, preferably about 3 to about 30%, trivalent cations. In general, when the divalent cations and other monovalent cations are present, they each may be present in an amount of from about 1% to about 89%.

### Brief Description of the Drawings

Fig. 1 shows the nitrogen isotherms obtained in the test described in the Example; and
Fig. 2 shows the oxygen isotherms obtained in the test described in the Example.

### Detailed Description of the Preferred Embodiments

Based on molecular modeling and sorption property information of novel adsorbent structures it has been discovered that novel tetrahedral framework adsorbents selected from BOG, CAN, EUO, FER, MAZ, MEL, MFI, MFS, MTT, MTW, NES, STI, TON, VET frameworks and mixtures thereof in which the adsorbents have from about 0% to about 100% monovalent cations, from about 0% to about 100% divalent cations and from about 0% to about 100% trivalent cations are especially suitable for selective separation of nitrogen from gas mixtures.

In accordance with this invention the essentially pure lithium, divalent and lithium/divalent and/or other monovalent and/or trivalent cation-containing adsorbents are characterized by excellent nitrogen adsorption and selectivity, thermal stability, and a reasonable cost of production.

The three letter codes identifying the tetrahedral frameworks are structure type codes assigned by the International Zeolite Association in accordance with rules set up by the IUPAC Commission on Zeolite Nomenclature and as set forth in Atlas of Zeolite Structure Types, W.M. Meier et al., 4th Revised Edition, 1996.

The divalent cations in the novel adsorbents of this invention are selected from alkaline earth metal cations, zinc, iron, nickel, manganese, copper (II), cadmium, and mixtures thereof. The monovalent cations in the novel adsorbents of this invention are selected from hydronium, copper (I), silver, thalium, alkali metal cations, and mixtures thereof. The trivalent cations in the novel adsorbents of this invention are selected from aluminum, scandium, gallium, iron (III), chromium (III), indium, yttrium, lanthanides, and mixtures thereof.

Generally, the adsorbents of this invention have from about 0% to about 100% monovalent cations, from about 0% to about 100% divalent cations and from about 0% to about 100% trivalent cations. Generally, the minimum preferred percentage of lithium in pure lithium-cation exchanged adsorbents of this invention, on an equivalents basis, is 95% and preferably 98% or 99%. The residual exchangeable cations will generally be the alkali metal cations, alkaline earth metal cations, hydronium, and mixtures thereof. Generally, the minimum preferred percentage of divalent cations in pure divalent-cation exchanged adsorbents of this invention, on an equivalents basis, is 95% and preferably 98% or 99%. The residual exchangeable cations will generally be the alkali metal cations, alkaline earth metal cations, hydronium, and mixtures thereof. Generally, the minimum percentage of lithium in lithium/monovalent cation exchanged adsorbents, on an equivalents basis, is 10% and preferably 95%. Generally, the minimum percentage of lithium in lithium/divalent cation exchanged adsorbents, on an equivalents basis, is 10% and preferably 80%. Generally, the minimum percentage of lithium in lithium/mono- di- and trivalent cation exchanged adsorbents on an equivalents basis is 10% and preferably 85%.

Pore size is also an important selection criterion is important for two major reasons. On the one hand, the pores should be large enough to allow adsorption of diatomic molecules, such as nitrogen and oxygen, i.e. the pores should be larger than 3.6 Å. On the other hand, our molecular modeling of nitrogen adsorption indicates that nitrogen molecules adsorb at the exposed cations in the end-on geometry or radially with respect to the direction of a straight cylindrical pore. Such geometry is believed to be optimal for nitrogen physisorption and the N₂/O₂ separation selectivity. When these adsorption sites were associated with exposed Li cations, the minimum pore size required for the favorable end-on orientation of adsorbed nitrogen molecules was 4.2 Å. In light of the above, a preferred minimum pore size for the N₂-selective adsorbents of the invention is about 4.2 Å.

An additional criteria for determining the preferred adsorbents of the invention is negative charge density of the framework. In particular, this charge density defines the nonframework cation content which in turn governs nitrogen adsorption and N₂/O₂ selectivity. For the invention, a minimum negative charge density per T-site of -0.11 units of negative charge at any framework composition is preferred.

This invention also provides a process for preparing such mono-, di- and trivalent cation exchanged adsorbents, which comprises:
ion-exchanging an adsorbent from the group comprising BOG, CAN, EUO, FER, MAZ, MEL, MFI, MFS, MTT, MTW, NES, STI, TON, VET frameworks and mixtures thereof in one monovalent cation-exchanged form with a solution of another desired monovalent cation salt until a desired level of this latter monovalent cation exchange is achieved; and thereafter, if necessary, ion-exchanging the monovalent cation-exchanged adsorbent thus produced with a solution of a mono-, di- or trivalent cation salt until a sufficient proportion of the monovalent cations have been replaced with mono-, di- or trivalent cations to provide a mono- and divalent cation equivalent ratio within the specified range.

The order of ion exchange is not important. The preferred method for preparing the adsorbents of the present invention is to ion-exchange base adsorbents in the sodium or ammonium forms with a solution of a lithium salt until no further lithium can be introduced into the adsorbent, and then to ion-exchange the lithium form of the adsorbents thus produced with a solution of the appropriate mono-, and/or di- and/or trivalent cation salt until the desired Li⁺/(Li⁺+M⁺+M²⁺+M³) ratio is achieved. Pure divalent cation forms, such as the Ca form, can be prepared by directly ion-exchanging base adsorbents in the sodium or ammonium form forms with a solution of a divalent cation salt until no further divalent cation can be introduced into the adsorbent. Techniques for the ion-exchange of adsorbents are well-known to those skilled in this art, and hence will not be described in detail herein. In some cases it may be necessary to separate, dry and thermally activate the partially ion-exchanged adsorbent at 150-600°C, and preferably at 300-500°C under controlled conditions in order to minimize the steaming damage of the adsorbent, and then perform final stages of the ion exchange. Otherwise, the base adsorbent can be ion-exchanged first with one or more of the specified mono-, and/or di- and/or trivalent cations to a desired level, followed by the lithium exchange to a specified level. Alternatively, the base adsorbent may be simultaneously exchanged with lithium cations and one or more of the specified mono-, and/or di- and/or trivalent cations. In some cases it may be necessary to calcine the as-synthesized adsorbents prior to ion-exchange steps in order to remove organic template which was used to crystallize the adsorbent phases. The template removal is well-known to those skilled in this art, and hence will not be described in detail herein. After a template is removed, partially or completely hydrogen-exchanged form (H-form) of the adsorbents of the present invention may be titrated with a basic monovalent cation-containing solution either in water or in a polar aproptic solvent to effect the monovalent cation exchange. Following the titration of the H-form of adsorbents, the exchangeable cations other than protons are replaced by a conventional ion exchange in an aqueous medium.

Another method to effect trivalent cation exchange in microporous tetrahedral framework structures, especially smaller pore structures, is the solid state exchange of a trivalent cation salt. The advantage of this method over aqueous cation exchange is that the trivalent cations in the solid state are not hydrated, and, therefore, may very easily enter various cation sites associated with the tetrahedral framework due to their small size. These methods are known to those skilled in the art and may be found in H. G. Karge, Stud. Surf. Sci. Catal. 105 (1997) 1901. Typically, the base adsorbent is heated with trivalent cation salt at 293-773K to induce solid state cation exchange, followed by an aqueous wash and drying steps.

In one embodiment of the invention, about 0% to about 100% of the exchangeable cations are monovalent cations, from about 0% to about 100% of the cations are divalent cations, and from about 0% to about 100% of the cations are trivalent ions. The preferred adsorbents of the invention have as exchangeable cations on an equivalents basis from about 0 to about 100% lithium ions, preferably 10 to about 99% lithium ions, from about 0% to about 100% divalent ions, preferably from about 1% to about 89% divalent ions, 0% to 20% of other monovalent cations, and about 3 to about 30% of trivalent ions. In some cases divalent, monovalent or trivalent cations in ion exchanged adsorbents may be residual as a result of the procedure employed to manufacture the adsorbents of the invention. Generally, the residual ions may be sodium, potassium, rubidium, cesium, ammonium, hydronium, magnesium, calcium, strontium, barium, zinc, copper, aluminum, iron and chromium. In some cases it is desirable to use divalent cations as part or most of all of the residual exchangeable cations, since divalent cation-exchanged adsorbents have better thermal stability characteristics than pure lithium forms of the adsorbents. Divalent cation-exchanged adsorbents also have superior nitrogen adsorption characteristics than do the sodium, ammonium and potassium forms of adsorbents. In some cases it may not be feasible to exchange part or all of the cations in a given adsorbent structure with lithium and/or mono-, and/or di- and/or trivalent cations. In such cases these nonexchangeable cations are located in screened sites and cannot interact with gas molecules.

The adsorbents of the present invention can have a variety of physical forms, and the exact physical form of the product may affect its utility in nitrogen gas separation processes. When the adsorbents of the present invention are to be used in industrial adsorbers, it may be preferred to aggregate, e.g. pelletize, the adsorbent to control the macropore diffusion, or else in an industrial size adsorption column pulvirulent adsorbent may compact, thereby blocking, or at least significantly reducing flow through, the column. Those skilled in adsorbent technology are aware of conventional techniques for aggregating adsorbents in powder form; such techniques usually involve mixing the adsorbent with a binder, which is typically a clay, forming mixture into an aggregate, typically by extrusion or bead formation, and heating the formed adsorbent/binder mixture to a temperature of about 600-700°C to convert the green aggregate into one which is resistant to crushing.

The binders used to aggregate the adsorbents may include clays, silicas, aluminas, metal oxides and mixtures thereof. In addition, the adsorbents may be formed with materials such as silica, alumina, silica-alumina, silica-magnesia, silica-zirconia, silica-thoria, silica-berylia, and silica-titania, as well as ternary compositions, such as silica-alumina-thoria, silica-alumina-zirconia and clays present as binders. The relative proportions of the above materials and the active adsorbents may vary widely with the adsorbent content ranging between about 1 and about 99 percent by weight of the composite. Where the adsorbent is to be formed into aggregates prior to use, such aggregates are desirably about 1 to about 4mm in diameter.

Aggregation may be affected before or after the ion-exchanges required to produce the adsorbents of the present invention, i.e., one can first produce the mono- and/or di- and/or trivalent cation-exchanged adsorbents and then effect aggregation, or one can use as the starting material for the ion-exchanges the adsorbent which is already in aggregate form. In general, the latter is preferred, since sodium forms of adsorbents are usually more thermally stable than the lithium/mono- and/or di- and/or trivalent cation-exchanged adsorbents of the present invention and hence less susceptible to damage from the high temperatures used in the aggregation process. However, it should be noted that activation of the lithium/mono- and/or di- and/or trivalent cation-exchanged adsorbents is required even if the sodium-form of the adsorbent used as starting material has been activated during the aggregation process.

Adsorbents of the present invention can be used in any of the conventional types of nitrogen gas separation processes, particularly PSA and TSA, preferably PSA processes, and the conditions used in the processes of the invention will in general be the same as those used in prior art processes. Thus, in a PSA separation process of the present invention, the first, adsorption pressure will typically be in the range of from about 35 to about 65 psia, while the second, desorption pressure will typically be in the range of from 3.7 to about 16.7 psia. The temperature at which the process is conducted is limited only by the decline in adsorption capacity with increasing temperature which the present adsorbents share with all other adsorbents. Typically, the process will be conducted at a temperature in the range of about -15°C to about +60°C.

This invention particularly provides a PSA process for separating nitrogen from a feed gas containing nitrogen and oxygen, which process comprises:
contacting a gaseous feed mixture of nitrogen and oxygen with an adsorbent of this invention under a first pressure, thereby causing nitrogen to be selectively adsorbed into an adsorbent, and producing a gaseous first product mixture containing a greater proportion of oxygen than the feed mixture;
separating the first product mixture from the adsorbent; and
reducing the pressure on the adsorbent to a second pressure lower than the first pressure, thereby causing desorption from the adsorbent of a gaseous second product mixture containing a greater proportion of nitrogen than the feed mixture.

When the nitrogen gas separation process of this invention is a PSA process conducted at a temperature of from about -15° to about 70°C, the adsorption step is generally carried out at an absolute pressure in the range of from about 35 to about 65 psia and adsorbent is regenerated at an absolute pressure in the range of about 3.7 to about 16.7 psia. When the nitrogen separation process of the invention is a TSA process the adsorption step is generally carried out at a temperature within the range of about -20°C to about 50°C and adsorbent is regenerated at a temperature within the range of about 0°C to about 350°C.

The following Example is given, though by way of illustration only, to show the properties of adsorbents of the present invention.

In the Example, the following test procedures were followed.

### Molecular Modeling Procedure

Adsorbent structure and sorption property modeling was performed using commerical molecular modeling package Cerius2 obtained from Molecular Simulations Inc.

### Structure Modeling

Zeolite structures with desired framework Si/Al ratios were obtained by random Al substitution into all-silica frameworks in accordance with the Loewenstein's rule. Cation species were then placed in the energy minima sites associated with negatively charged framework structure. Such crude cation locations and framework structures were optimized first by keeping the unit cell rigid, and, finally, by adjusting both the coordinates of all atoms and the unit cell parameters.

### Sorption Modeling

The obtained zeolite structures were used to predict their sorption properties. The Grand Canonical Monte Carlo (GCMC) sorption code used allowed to adjust both the number and position of sorbate species (i.e. nitrogen and oxygen molecules) in the micropores of various zeolites in a random fashion. New configurations of sorbates in the micropores were either accepted or rejected based on their energies. The GCMC procedure was run for a very large number of steps so as to exhaustively sample all available configurational space and converge simulation to some average value of sorption at a given sorbate pressure and temperature. The obtained sorption loadings were converted from the molecules/unit cell units to mmol/g and shown in the drawings.

### EXAMPLE 1

Experimental and simulated sorption data for zeolite Li-MAZ 3.0-3.5.

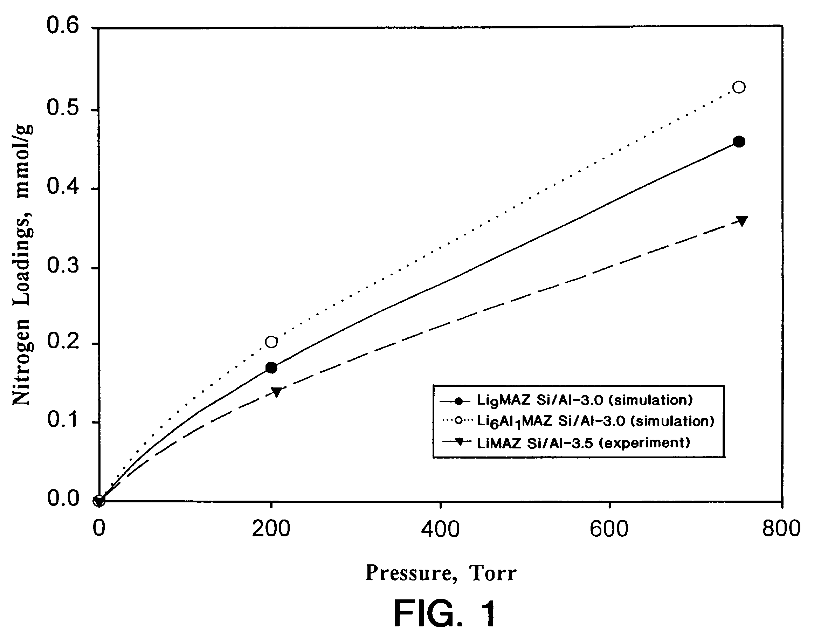

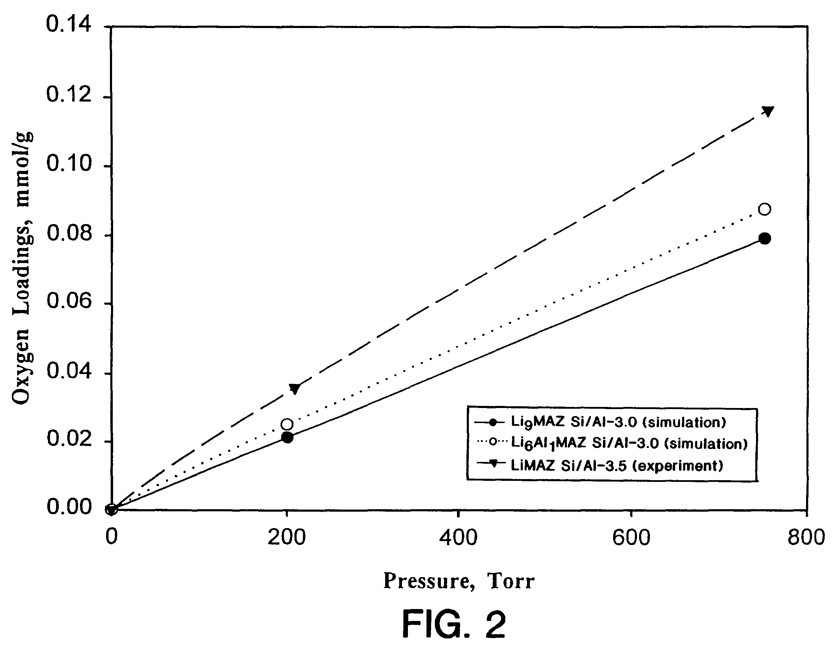

Experimental data were collected for the zeolite omega sample (Li-MAZ) with Si/Al ratio in the 3.0-3.5 range. Simulated GCMC sorption data were obtained using energy-minimized structures of zeolites Li₉MAZ Si/Al=3.0 and partially trivalent-cation (Al³⁺) exchanged MAZ Si/Al=3.0, Li₆Al₁MAZ. The experimental and simulated data are shown in Figures 1 and 2.

The comparison of the experimental and simulated data indicated the following:

The results of the sorption simulation for Li₉MAZ Si/Al=3.0 agree reasonably well with the experimental sorption data for LiMAZ Si/Al=3.0-3.5. Slightly lower experimental N₂ capacities are likely to be due to the somewhat higher Si/Al ratio of the experimental sample. The agreement between the experiment and theory allows one to simulate sorption for a partially Al³⁺ exchanged zeolite LiMAZ 3.0 and evaluate the impact of trivalent cation exchange on sorption properties of Li-zeolites by comparing these results with the simulation for LiMAZ 3.0.

The comparison between the simulated data for Li₉MAZ and Li₆Al₁MAZ Si/Al=3.0 revealed that even at 30% levels of trivalent cation exchange (30% on the equivalents basis), the trivalent cations have a minor impact on the sorption properties as compared to the all-lithium exchanged form. Both the N₂ and O₂ loadings increase slightly, but the ratio of these loadings (N₂/O₂ selectivity), for example at 750 Torr, is virtually unchanged (5.8-6.0).

This demonstrates that trivalent cations even at the exchange levels of 30% on the equivalents basis have a very minor impact on sorption properties. In other words, the adsorption capacity for the partially trivalent cation exchanged form is comparable to the fully lithium exchanged Li-Omega zeolite (LiMAZ) at Si/Al ratio in the range of 3.0 to 3.5. The partial trivalent cation exchange promotes greater thermal stability of a zeolite framework while retaining the desirable sorption properties.

With the foregoing description of the invention, those skilled in the art will appreciate that modifications may be made to the invention without departing from the spirit thereof. Therefore, it is not intended that the scope of the invention be limited to the specific embodiments illustrated and described.

## Claims

1. A novel adsorbent selected from BOG, CAN, EUO, FER, MAS, MEL, MFI, MFS, MTT, MTW, NES, STI, TON, VET frameworks and mixtures thereof, said adsorbent having exchangeable cations, the exchangeable cations comprising from about 0% to about 100% monovalent cations, from about 0% to about 100% divalent cations, and from about 0% to about 100% trivalent cations, wherein said adsorbent has a minimum negative charge density per T-site of -0.11 units of negative charge.

2. The adsorbent of claim 1, wherein the exchangeable cations comprise from about 1% to about 99% lithium from about 0% to about 89% divalent cations, from about 0% to about 89% other monovalent cations, and from about 1% to about 90% trivalent cations.

3. A adsorbent according to Claim 2 wherein the exchangeable cations other than lithium comprise from about 1% to about 89% divalent cations, from about 1% to about 89% monovalent cations, and about 3 to about 30% trivalent cations.

4. The adsorbent according to Claim 3 wherein the divalent cations are selected from the group consisting of alkaline earth metal cations, zinc, iron, nickel, manganese, copper (II), cadmium, and mixtures thereof, the monovalent cations are selected from the group consisting of alkali metal cations, hydronium, copper (I), thalium and mixtures thereof, and the trivalent cations are selected from the group consisting of aluminum, scandium, gallium, iron (III), chromium (III), indium, yttrium, lanthanides and mixtures thereof.

5. A lithium cation-containing adsorbent according to Claim 1 wherein the exchangeable cations comprise about 70% to about 95% lithium, from about 5% to about 30% divalent cations, from about 0% to about 10% monovalent cations and from about 3% to about 30% trivalent cations.

6. The adsorbent according to Claim 1 wherein the exchangeable cations are lithium, hydronium, magnesium, calcium, strontium, zinc, copper (II), aluminum, iron and chromium cations and mixtures thereof.

7. The adsorbent according to Claim 3 wherein the exchangeable cations are lithium, hydronium, magnesium, calcium, strontium, zinc, copper (II), aluminum, iron and chromium cations and mixtures thereof.

8. The adsorbent according to Claim 1 wherein the exchangeable cations consist substantially of lithium, divalent and trivalent cations.

9. In a process for separating nitrogen gas from a gas mixture in which the gas mixture is contacted with an adsorbent to preferentially adsorb nitrogen gas from the gas mixture, the improvement comprising contacting the gas mixture with the adsorbent of Claim 1.

10. The process of claim 9, wherein the adsorbent is a lithium cation-containing adsorbent.
